# EUROPEAN PATENT APPLICATION

(11) **EP 0 579 322 A1**
(43) Date of publication of application: **19.01.1994**
(21) Application number: 93202013.4
(22) Date of filing: 09.07.1993
(51) Int. Cl.: B65B 63/02, B09B 3/00

(54) **A method and device for processing waste**

(30) Priority: 14.07.1992 NL 9201262
(71) Applicant: BEHEERSMAATSCHAPPIJ R. BONTRUP B.V., NL-5445 AR Landhorst (NL)
(72) Inventor: Bontrup, Rudolph, Landhorst (NL)
(74) Representative: Van kan, Johan Joseph Hubert, Ir.

(57) **Abstract**

The invention relates to a method for processing waste by separating the waste into a still usable fraction and an unusable fraction, which unusable fraction is compressed into packs at pressures of tens kg/cm², whereby said compression is carried out in several steps, so that in a first step the precompression into bales is carried out at a pressure of up to 7 kg/cm² and in a second step the pre-compressed bales are compressed into packs at a pressure of 25-1600 kg/cm². Preferably the packs compressed in this manner are shrink- wrapped. The invention also relates to a device for carrying out this method.

## Description

The invention relates to a method for processing waste by separating the waste into a still usable fraction and an unusable fraction, which unusable fraction is compressed into packs at pressures of tens kg/cm². The invention furthermore relates to a device for carrying out such a method.

This method is known from EP-A-373 460 according to which the usable fraction is pressed into blocks or plates under a pressure from 10 to 300 bar, provided with a foil by shrink-wrapping and in the form of bricks supplied to a ground for collecting waste.

It is generally known that the collection and processing of waste, in particular domestic and industrial waste, is giving the society an increasingly large problem, because the amounts of waste are assuming such gigantic proportions that it is no longer possible to dump this waste in the manner known so far. An alternative for said dumping is the incineration of waste, but the combustion gases to be discharged often contain very harmful components, so that the incineration of waste still needs to be considerably improved before it becomes possible to process a substantial part of the waste in this manner. Moreover, the incineration of waste is relatively costly and insufficient incinerators are available for keeping the increasing amounts of waste under control by incinerating this waste.

The only relief in the amounts of domestic and industrial waste produced is obtained by collecting waste in separated form and reusing the still usable fractions, possibly after a purification treatment. But also the separate collection of waste is on the one hand insufficiently developed, whilst furthermore a large part of the waste remains in the form of an unusable material, which needs to be destroyed or dumped.

In summary it may therefore be stated that a large part of the waste produced needs to be stored and/or deposited, so that the authorities are constantly looking for locations where said waste can be dumped. Due to the fact that the population density is increasing and that the most has to be made of the nature that is left, it is becoming increasingly difficult to find such dumping sites, especially because the protests of the people that live in the surroundings of such dumps are becoming increasingly vehement, and these people are making it more and more difficult to extend the existing dumps or find new ones. That is why an intensive investigation has been made into alleviating the problems that have arisen with regard to the processing of waste, and this has appeared to be possible by using a method according to the invention. The method according to the invention as referred to in the introduction is characterized in that said compression is carried out in several steps, whereby in a first step the pre-compression into bales is carried out at a pressure of up to 7 kg/cm² and in a second step the pre-compressed bales are compressed into packs at a pressure of 25-1600 kg/cm².

Compressing fibrous materials in several steps by carrying out at first the precompression and then the main compression at a high pressure is as such known from DE-A-3,009,016. That method however does not concern the compression of waste and the last compression takes place at a lower pressure than used according to the present process. The method for compression of fibrous materials in several steps also is known from WO 86/07030.

After compression of the bales into relatively small packs said packs are shrink-wrapped, possibly after stacking. Said shrink-wrapping may take place in a manner known per se. By stacking the shrink-wrapped packs on dumps it is on the one hand possible to use the available ground in an optimal manner, because the packs take up relatively little space, whilst on the other hand the shrink-wrapped packs are impervious to moisture and resistant against weather influences, so that it is prevented that environmentally problematic materials can leak out.

Before the waste material is compressed, the material which is still usable is removed, the remainder is reduced and any metals are removed by means of a magnet.

The invention will be explained in more detail in the following description, in which reference is made to the appended drawing, in which:
Figure 1 is a block diagram of the main components of te device and of the method steps; and
Figure 2 is a block diagram with a few preferred refinements in comparison with the method and device shown in Figure 1.

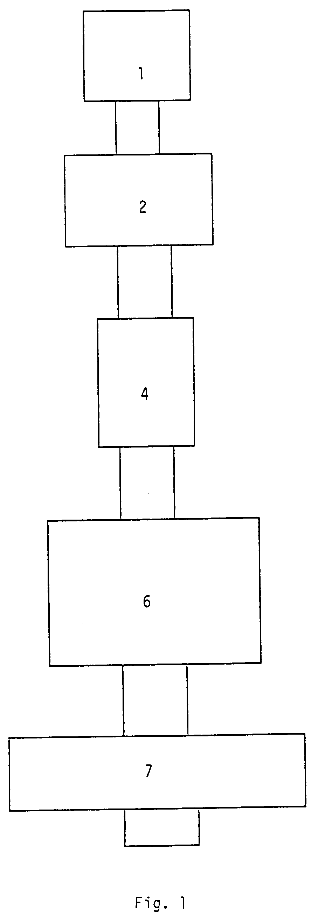

In Figure 1 the waste is supplied to a depot 1, in which depot 1 the materials which are still usable can be removed from the waste. Besides the depot 1 may be regarded as a collecting place, which acts as a buffer for supplying the waste material to the following press(es).

Following the depot 1 a machine 2 for reducing the waste material is provided, wherein the material is reduced to an average particle size of less than 20 cm. Before processing the waste material any further it may be passed through a screen (not shown).

The reduced material is then supplied to a baling press 4, which operates with a pressure of up to 7 kg/cm², by means of which baling press 4 the pre-compressed material is obtained. In some places pressures of up to about 7 kg/cm² are already being used for compacting waste. The bales obtained by means of the baling press 4 are then supplied to the compressing machine 6, in which the bales are compressed to packs at a pressure of 25-1600 kg/cm². According to the invention the most important operation takes place in this compressing machine 6, because the greatest volume saving is achieved when these comparatively very high pressures are used. Then the packs are supplied to the device 7, where they are stacked on pal lets and subsequently shrink-wrapped. The shrink-wrapped, stacked pal lets are subsequently carried off for storage at suitable locations designated for this purpose.

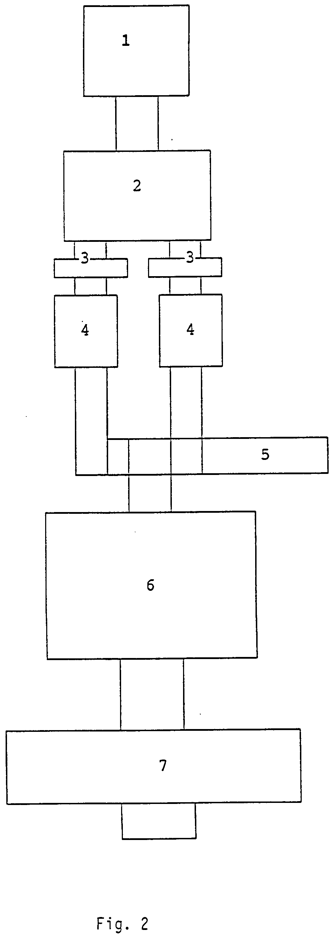

The block diagram shown in Figure 2 largely corresponds with the block diagram of Figure 1, except that a magnetic belt is provided between the reducing machine 2 and the baling press 4, by means of which the magnetic materials can be removed from the crushed waste. Following the baling press a distributing station 5 is moreover provided, so that the compressing machine 6 can be used in an optimal manner, because the distributing station acts as a buffer, on the one hand in order to have a stock of bales available, which can be supplied to the compressing machine 6, whilst on the other hand it is possible to relieve the compressing machine when the amount of waste being supplied is so large that the baling press 4 can still handle process this amount, whereas the compressing machine 6 is no longer able to do so. In addition to that the flexibility of the device as a whole is increased by using two baling presses 4a and 4b. The pre-compressed waste obtained in the baling press 4 is easier to handle than the waste obtained by means of the reducing machine 2. That is why it is preferred in any case to compresse the reduced waste by means of the baling press 4, and subsequently possibly storing it at the distributing station 5, before compressing it any further in the compressing machine 6.

The device according to the invention is characterized in that it consists of a baling press having an inlet and an outlet, whereby a compressing machine operating with a pressure of 25-1600 kg/cm² is arranged behind said baling press. Preferably an shrink-wrapping apparatus is disposed behind the compressing machine. As indicated in Figure 2, it is preferred to provide a distributing station 5 between the baling press 4 and the compressing machine 6, so that the entire process is easier to control.

For those skilled in this field of the art it will be apparent that before the baling press 4 is used further refinements may be provided, such operations must be considered to fall within the scope of the present invention, however, so long as the original waste is eventually compressed by means of two presses, whereby the first press works with a pressure of up to 7 kg/cm² and the second press works with a pressure of 25-1600 kg/cm².

When the method according to the invention is used in practice the waste material to be compressed is subjected to a first compression in a baling press, which results in bales of 120 x 120 cm and a length of 100 cm. In that case said compression takes place at a pressure of approximately 100 tons. Then, in a second compressing operation, these bales are subjected to a pressure ranging from 400 - 4000 tons, whereby the bales are compressed from 120 x 120 cm into packs of 120 x 120 cm and a length of 40 cm.

The pressures indicated correspond with the pressure in the first press of 7 kg/cm² and a pressure in the second press of 25 - 1600 kg/cm².

## Claims

1. A method for processing waste by separating the waste into a still usable fraction and an unusable fraction, which unusable fraction is compressed into packs at a pressure of tens kg/cm², characterized in that said compression is carried out in several steps, whereby in a first step the pre-compressing into bales is carried out at a pressure of up to 7 kg/cm² and in a second step the pre-compressed bales are compressed into packs at a pressure of 25-1600 kg/cm².

2. A method according to claim 1, characterized in that said packs are shrink-wrapped.

3. A method according to claims 1 - 2, characterized in that before said unusable fraction is compressed, the material is first reduced and any metals are removed by means of a magnet.

4. A method according to claims 1 - 3, characterized in that the supply of said bales to the compressing machine takes place directly or via a distributing station.

5. A device for carrying out the method according to claim 1, said device consisting of a baling press having an inlet and an outlet, characterized in that a compressing machine (6) is arranged behind said baling press (4), which compressing machine works with a pressure of 25-1600 kg/cm².

6. A device according to claim 5, characterized in that a shrink-wrapping apparatus (7) is disposed behind said compressing machine (6).

7. A device according to claims 5-6, characterized in that a distributing station (5) is arranged between said baling press (4) and said compressing machine (6).
